Europäisches Patentamt

European Patent Office

Office européen des brevets

(19)

(11) EP 0 390 640 B1

(12) **FASCICULE DE BREVET EUROPEEN**

(45) Date de publication et mention
de la délivrance du brevet:
**21.07.1999 Bulletin 1999/29**

(51) Int Cl.$^6$: **G06T 5/00**, G06T 5/50,
G06K 9/64

(21) Numéro de dépôt: **90400753.1**

(22) Date de dépôt: **20.03.1990**

(54) **Procédé de recalage automatique d' images**

Verfahren zur automatischen Bildentzerrung

Method for automatic image matching

(84) Etats contractants désignés:
**DE ES GB IT NL**

(30) Priorité: **29.03.1989 FR 8904085**

(43) Date de publication de la demande:
**03.10.1990 Bulletin 1990/40**

(73) Titulaire: **GENERAL ELECTRIC CGR S.A.
92130 Issy les Moulineaux (FR)**

(72) Inventeurs:
• **Leclerc, Vincent
F-75116 Paris (FR)**
• **Liénard, Jean
F-75116 Paris (FR)**

(74) Mandataire: **Schmit, Christian Norbert Marie et al
Cabinet Ballot-Schmit
7, rue Le Sueur
75116 Paris (FR)**

(56) Documents cités:
**DE-A- 3 732 435**

• **ONZIEME COLLOQUE SUR LE TRAITEMENT DU
SIGNAL ET DES IMAGES, Nice, FR, 1-5 juin 1987,
pages 487489, GRETSI; V.LECLERC et al.:
"Recalage élastique d'images angiographiques"**
• **PROCEEDINGS OF THE IEEE 1985 NATIONAL
AEROSPACE AND ELECTRONICS
CONFERENCE, NAECON 1985, Dayton, US,
20-24 mai 1985, vol. 2, pages 1395-1398, IEE E,
New-York, US; L.A.TAMBURINO:"Generalized
inte rest operators"**
• **PROCEEDINGS OF THE IEEE COMPUTER
SOCIETY CONFERE NCE ON COMPUTER
VISION AND PATTERN RECOGNITION,
Washington, US, 19-23 juin 1983, pages 432-441,
IEEE, New-York, US; F.GLAZER et al.: "Scene
matching by hierarchical correlation"**

## Description

La présente invention a pour objet un procédé de recalage automatique d'images, utilisable notamment pour visualiser des images. Elle est destinée à servir principalement dans le domaine médical où on cherche à comparer des images représentant des mêmes scènes, acquises à des moments différents et/ou selon des protocoles différents. Par exemple, on cherchera à mettre en correspondance des images acquises selon différentes modalités, une modalité de tomodensitométrie et une modalité de RMN ou de gammagraphie, de manière à compléter les enseignements extraits d'une image par des enseignements correspondants extraits d'une autre.

Dans une application plus courante, l'invention est destinée à être mise en oeuvre en angiographie où on cherche à représenter les structures de vascularisation des tissus. On rappelle qu'en angiographie la mise en évidence des structures vasculaires est obtenue par comparaison de deux images acquises respectivement avec et sans l'injection d'un produit de contraste dans le réseau sanguin d'un patient. En soustrayant ensuite point à point une image d'une autre, on obtient l'image des structures vasculaires seules. Le problème à résoudre, ici comme dans la comparaison des images acquises avec des protocoles différents, se situe dans la comparaison point à point. Pour de nombreuses raisons (essentiellement déplacement du patient) la structure ne se présente pas de manière identique d'une image à l'autre, et la soustraction point à point des images produit des artéfacts d'images à l'endroit des bords des structures tissulaires représentées. Un déplacement d'une dizaine de pixels doit ainsi être attendu en comparaison d'images obtenues selon des protocoles différents, alors qu'un déplacement de quelques pixels est prévisible dans l'acquisition des images angiographiques.

Pour pouvoir faire une soustraction ou une comparaison point à point, il est nécessaire de corriger la distorsion subie par une des deux images, dite image masque ou image à recaler, par rapport à une première image dite image de référence. Une fois qu'on a corrigé la distorsion de l'image à recaler, la comparaison peut être faite automatiquement simplement. En angiographie, pour des raisons intuitivement faciles à comprendre, l'image de référence (à laquelle on ne fait pas subir de correction de distorsion) sera de préférence l'image opacifiée obtenue après injection du produit de contraste dans le sang du patient. On choisira naturellement comme image de référence l'image contenant l'information sensible à laquelle on s'attache.

Cependant l'invention peut avoir d'autres utilisations que celles décrites dans le domaine médical. Elle peut notamment être utilisée dans le contrôle industriel où la comparaison d'images acquises selon des protocoles différents (rayons X, ultrasons) se développe. Bien que l'invention soit décrite ici dans une application médicale, elle peut bien entendu être utilisée dans ces autres domaines.

On connaît le mode général de recalage des images. Celui-ci consiste en une série de six opérations concernant : le pré-traitement des images, la sélection d'un certain nombre de points de contrôle (appelés amers), l'estimation de la distorsion en chacun de ces amers, la validation de ces amers, l'interpolation de la distorsion à toute l'image, et la restauration de l'image en correction. Le pré-traitement des images comporte généralement au moins une numérisation de l'image de manière à remplacer une image physiquement visible par une collection de points, on dit aussi pixels, dont les adresses sont déterminées et sont mises en correspondance à chaque fois avec un niveau de gris, ou un niveau de luminosité, attribué aux points.

La sélection des amers doit souscrire à un certain nombre de contraintes. Notamment les amers doivent être robustes et répartis d'une manière homogène. On dit qu'un amer est robuste s'il est le lieu d'une mesure de déplacement exact (pour une précision requise). Ceci signifie que les points de contrôle, qui doivent en quelque sorte servir de pivot pour la correction de distorsions doivent être des points sûrs. Ils doivent être des repères facilement identifiables et intangibles. Dans ce sens la signification du mot amer, qui se rapporte au rocher qui dépasse du niveau de la mer, est suffisamment significative de leur fonction. En outre, les amers doivent être répartis d'une manière homogène . Si les amers sont répartis d'une manière homogène, la modélisation de la distorsion sera de bonne qualité en tout endroit de l'image. Les amers doivent aussi souscrire à une contrainte de densité. La densité représente simplement le nombre d'amers retenus pour l'image. On comprend que plus le nombre d'amers est important plus la correction de distorsions sera fine et précise. Cependant, un nombre d'amers important entraîne en même temps un calcul de correction de distorsion lui aussi important. En général la densité est fixée par avance en fonction d'un coût de calcul accepté.

Après avoir sélectionné les amers dans l'image de référence, on cherche la position de leur correspondant dans l'image à recaler. Ce faisant, en mesurant les positions relatives entre les amers et leurs correspondant, on déduit les déplacements résultant de la distorsion. On interpole ensuite ces déplacements à toute l'image et on restaure l'image à recaler en fonction des déplacements interpolés.

Un tel schéma de recalage d'image a déjà été proposé. L'intérêt d'une telle méthode se trouve dans son caractère automatique. Ceci signifie que la correction des images va être effectuée sans intervention humaine. Tout le travail est accompli par un ordinateur. En pratique les méthodes automatiques échouent dans la phase de sélection et dans la phase de validation des amers. Plutôt que d'effectuer cette phase de sélection et de validation de manière automatique elles sont alors réalisées de façon manuelle. Un opérateur doit alors intervenir pour désigner les amers à retenir. Cette phase manuelle est bien entendu rédhibitoire en utilisation courante car elle nécessite un opérateur compétent et du temps qui font souvent défaut à l'utilisateur. Si l'intervention manuelle n'est pas effectuée, le recalage de l'image n'est pas bon, et, en angiographie en particulier les images obtenues par soustraction présentent alors des artéfacts de bords de structure. Le problème à résoudre pour la sélection et la validation automatique des amers consiste à ne retenir que les amers intéressants. L'intérêt d'un amer dépend de sa robustesse. Celle-ci peut s'exprimer en terme d'une erreur EQM attachée à chaque amer et qui s'écrit de la manière suivante :

$$EQM = d(V, \hat{V}) = \| V - \hat{V} \|$$

Dans cette expression V est le déplacement vrai, et $\hat{V}$ est son estimation. En effet, le déplacement vrai V n'est jamais connu, on ne peut en cherchant le correspondant d'un amer que faire par mesure une estimation de son déplacement. Et l'amer choisi est d'autant plus intéressant que cette estimation est proche du déplacement vrai : que EQM est faible. On est alors confronté à un problème difficile à résoudre qui est celui de choisir des amers robustes, en fonction de leur déplacement vrai associé (qui n'est jamais connu) et d'une estimation de ce déplacement (qui n'est pas connu tant qu'on n'a pas choisi l'amer). La solution qui consisterait à calculer cette erreur pour tous les amers potentiels de l'image, c'est à dire en définitive pour tous les points de l'image, est inexploitable. Elle conduit à une masse de calculs trop grande. En effet, les calculs d'estimation des déplacements des amers sont très longs. La solution inventée consiste alors à prédire quels seront les amers intéressants, par opposition aux autres points de l'image qui seront rejetés.

L'invention a donc pour objet de proposer une telle méthode de prédiction. On sait y dire d'avance et automatiquement quels seront les amers les plus robustes et les plus homogènes. Essentiellement dans l'invention, on a caractérisé la robustesse des amers par des calculs de grandeurs effectués sur toute l'image. A partir de ces grandeurs calculées, ou d'une combinaison d'entre elles, on prédit les amers à retenir, pour lesquels cette combinaison satisfait à un critère. Le principe de l'invention, basé sur la prédiction, revient alors à avoir élaboré un outil de mesure dont les résultats sont assimilables à une bonne prédiction. La validité de la méthode de l'invention a été vérifiée.

En outre, pour garantir l'homogénéité de la répartition des amers, dans l'invention on prévoit un sous échantillonnage arborescent, de type quadtree, de l'image de référence de manière à ne retenir à partir de quatre amers voisins et appartenant à quatre fenêtres carrées inscrites dans un carré plus gros, qu'un seul amer représentatif de ce carré. Ainsi de suite hiérarchiquement on réduit le nombre d'amers tout en conservant l'homogénéité de leur répartition, même si des amers, en certains endroits de l'image, sont moins robustes que des amers en d'autres endroits de l'image. En ces autres endroits de l'image de référence, les amers auraient été retenus en trop grand nombre si on ne s'était fixé comme critère de sélection que leur robustesse.

Ainsi, au moment de l'opération de sous-échantillonnage des amers on ne prend pas nécessairement en compte celui des amers des quatre fenêtres qui est le plus robuste mais, de préférence, l'amer dont un "coût de transition" sera le plus faible. On appelle coût de transition une combinaison des grandeurs représentatives de la robustesse de l'amer d'une part, et de la place de cet amer par rapport au centre du carré contenant les quatre fenêtres carrées auquel il appartient d'autre part. On pourra montrer que ce choix est aussi de nature à rendre automatiques les procédures manuelles connues de l'état de la technique dans lesquelles, à un moment ou à un autre, on a été obligé de réintroduire manuellement des amers en certains endroits importants des images.

Un tel type de recherche d'amers est abordé dans le document "ONZIEME COLLOQUE SUR LE TRAITEMENT DU SIGNAL ET DES IMAGES", NICE, FR, 1-5 Juin 1987, pages 487-489, GRETSI, V. LECLERC et Al.: "Recalage élastique d'images angiographiques". De même le document "PROCEEDINGS ON THE IEEE 1985 NATIONAL AEROSPACE AND ELECTRONICS CONFERENCE", NAECCON 1985, Dayton, US, 20-24 Mai 1985, vol.2, pages 1395-1398, IEEE, New York, US, L.A. TAMBURINO: "Generalized interet operatores" présente différents type de qualification des points d'une image. Ces enseignement ne montrent cependant pas comment effectuer l'estimation d'un déplacement qu'il est nécessaire de connaître pour corriger une image.

L'invention telle que définie dans la revendication 1 a donc pour objet un procédé de recalage automatique d'images dans lequel on recale une deuxième image, dite masque, distordue par rapport à une première image dite de référence.

D'autres modes de réalisation sont specifiés dans les revendications dépendantes.

L'invention sera mieux comprise à la lecture de la description qui suit et à l'examen des figures qui l'accompagnent. Celles-ci ne sont données qu'à titre indicatif et nullement limitatif de l'invention. Notamment l'application au génie médical ne peut constituer une restriction du domaine de l'invention. Les figures montrent :

- figures 1a à 1d : la représentation schématique de la mise en oeuvre d'un procédé de recalage d'images ;
- figures 2a à 2d : une représentation schématique des grandeurs calculées dans l'invention et caractéristiques de la robustesse des amers dans la première image ;
- figure 3 : une représentation schématique de la sélection hiérarchique des amers ;

- figure 4 : une représentation simplifiée d'une présélection des amers selon l'invention ;
- figure 5 : le principe de la sélection hiérarchique des amers ;
- figures 6a et 6b : une représentation schématique du principe du calcul des déplacements ;
- figures 7a à 7d : une représentation d'un perfectionnement de l'invention permettant une validation des amers retenus ;
- figure 8 : une représentation schématique des particularités du calcul des déplacements associés aux amers.

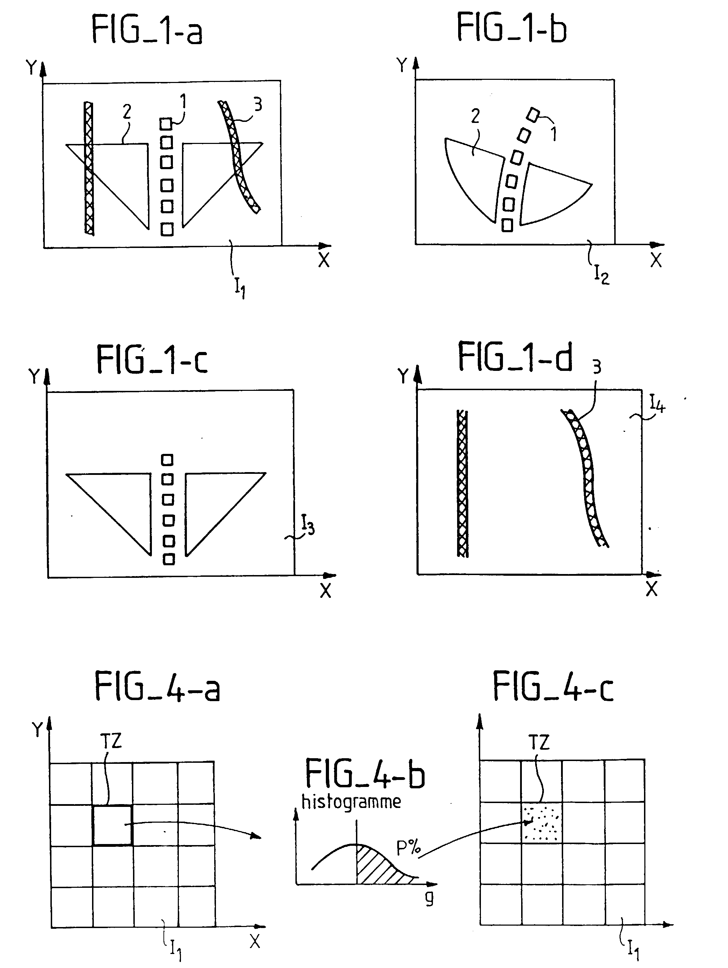

Les figures 1a à 1d représentent le procédé de recalage d'images mis en oeuvre dans l'invention. On dispose pour mettre en oeuvre ce procédé de deux images, une première image $I_1$ et une deuxième image $I_2$ : respectivement figures 1a et 1b. Dans un exemple particulier l'image $I_1$ dite de référence comporte à côté de structures osseuses 1 ou pulmonaires 2 un réseau 3 de vaisseaux sanguins opacifiés par un produit de contraste et qui ont été plus particulièrement révélés, au cours d'une expérimentation de radiologie, par injection d'un produit de contraste dans le sang du patient. L'image $I_2$ représente les mêmes éléments pour le même patient alors que le produit de contraste n'a pas été injecté et que le patient a bougé. Les deux images sont présentées chacune dans un repère X Y qui est le même. Le but de l'invention est de produire, à la place de l'image $I_2$ une image $I_3$, figure 1c, dans laquelle la distorsion des structures 1 et 2 a été restaurée conformément à son allure dans l'image $I_1$. Bien entendu en angiographie on soustrait ensuite le contenu de l'image $I_3$ de celui de l'image $I_1$ de manière à révéler en une image $I_4$ les structures vasculaires 3 recherchées seules. Mais dans d'autres utilisations de l'invention, comparaison d'images acquises selon des protocoles différents par exemple, on peut exploiter les images recalées de toutes les façons voulues. On peut par exemple faire des recherches statistiques automatiques en des régions correspondantes des images. On peut aussi vouloir en regarder une en transparence de l'autre.

Dans l'invention, comme dans l'état de la technique, on procède à un pré-traitement des images comportant notamment une numérisation des images. On reviendra ultérieurement sur certaines particularités, dans l'invention, de ce pré-traitement qui contribue dans celle-ci plus efficacement au succès de recalage, bien que des pré-traitements de ce type soient déjà connus en eux mêmes.

Pour fixer les idées, on admettra que l'image numérisée comporte une résolution exprimée en nombre de points, dans un exemple non limitatif le nombre de points de l'image sera de 512 x 512. Cet exemple chiffré pourra être transposé pour n'importe quelle autre valeur, mais il permettra de simplifier l'explication de l'invention. On suppose donc qu'on dispose de l'image de référence $I_1$ et de l'image masque $I_2$ résolues chacune sur 512 points x 512 points. Dans un premier temps, on considère que tous les points de l'image de référence peuvent servir de points d'amer. On utilise l'image de référence pour définir les points d'amer plutôt que l'image masque étant donné qu'on préfère évaluer les déplacements de l'image masque par rapport aux positions des points d'amer de l'image de référence. Ensuite en plus on procède de préférence à la restauration de l'image masque. Cependant on pourrait procéder différemment en calculant les points d'amer sur l'image masque, en évaluant les déplacements en conséquence, et en corrigeant ou l'image masque, ou l'image de référence.

Les amers potentiels ainsi définis sont en trop grand nombre pour pouvoir être traités efficacement. Il est donc nécessaire d'extraire de ces amers ceux de ces amers qui seront réputés par la suite les plus robustes. Le problème est donc bien à ce niveau de prédire parmi ces 512 X 512 amers potentiels ceux qui seront véritablement les amers sur lesquels on pourra s'appuyer pour faire la restauration. Dans ce but on a, dans l'invention, caractérisé l'image en élaborant des grandeurs physiques calculées dont la signification est représentative de la robustesse des amers. On trie ensuite parmi les amers potentiels les amers à retenir en fonction d'une combinaison de ces grandeurs à la satisfaction d'un critère. En corollaire de cette démarche, on vérifiera par un test de Student que cette démarche est cohérente et que donc les critères de prédiction choisis à priori, et représentés par les grandeurs de l'invention, correspondent précisément à la réalité.

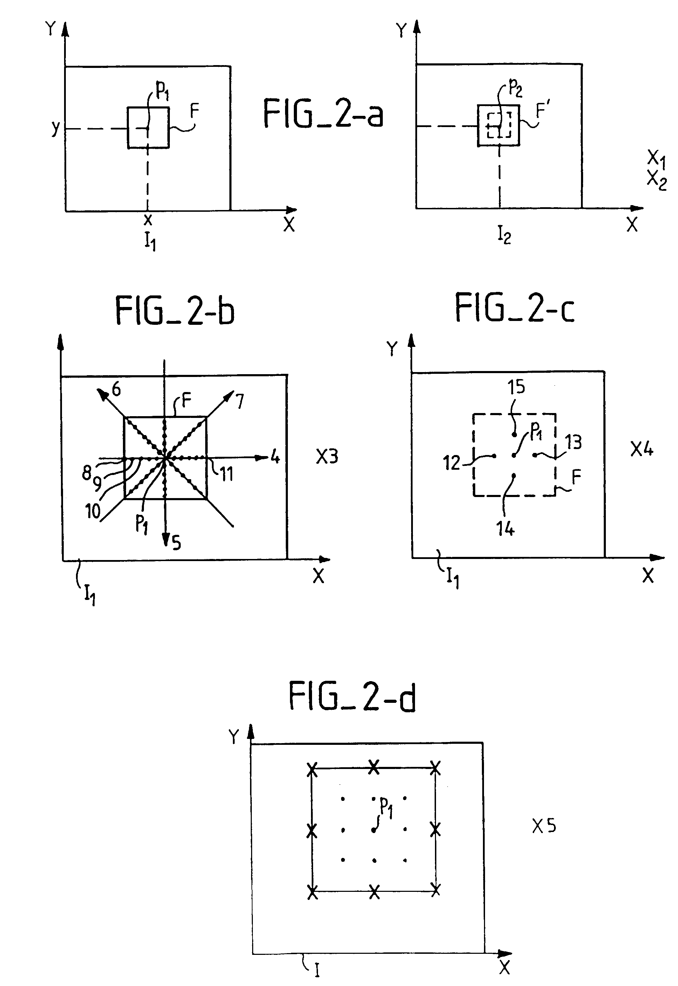

Les figures 2a à 2d donnent une représentation schématique des grandeurs préférées élaborées pour mesurer la robustesse des amers potentiels. Ces grandeurs sont appelées dans la suite de cet exposé $X_1$, $X_2$, $X_3$, $X_4$ et $X_5$. La figure 2a permet de comprendre le calcul des grandeurs $X_1$ et $X_2$. La grandeur $X_1$ est le ratio des moyennes de niveau de gris, calculées respectivement sur l'image de référence $I_1$ et sur l'image à recaler $I_2$. Par exemple à un point $p_1$ de coordonnées x y dans l'image $I_1$, associé à un niveau de gris $n_1$, on peut superposer, dans l'image $I_2$, un point $p_2$, de même coordonnées x et y dans cette image, mais de niveau de gris dans cette image $n_2$. Dans une fenêtre F encadrant $p_1$ (de préférence la fenêtre F est centrée sur $p_1$), on peut calculer la moyenne $m_1$ des niveaux de gris $n_1$. Dans une fenêtre F' superposable à la fenêtre F on peut calculer la moyenne $m_2$ des niveaux de gris des points voisins de $p_2$ dans l'image $I_2$. On dira que $X_1$ s'exprime de la manière suivante

$$1 \qquad X_1 = \left| 2(m_2 - m_1)/(m_1 + m_2) \right|$$

C'est à dire que $X_1$ est le ratio normalisé de la différence des moyennes, dans l'image masque et dans l'image de référence, des niveaux de gris. De préférence la fenêtre F' est de même taille que la fenêtre F. Mais on pourrait imaginer que ces fenêtres ne soient pas exactement superposables, ou même le fait que les points $p_1$ et $p_2$ n'y soient pas exactement centrés.

Aussi bien sur les fenêtres F on a pu calculer le ratio normalisé des moyennes, aussi bien on peut calculer, dans la fenêtre F de l'image $I_1$, l'écart type $X_2$ de la répartition statistique des niveaux de gris des points contenus dans cette fenêtre. Dans ces conditions $X_2$ s'écrira de la manière suivante :

$$2 \qquad X_2 = \sqrt{\sum_i (n_{1,i} - m_1)^2}$$

En pratique la dimension de la fenêtre F est telle que la fenêtre F comporte 256 pixels de l'image 512 X 512.

La signification physique de $X_1$ est la suivante : $X_1$ indique qu'il y a une très forte dissimilarité en niveau de gris moyen entre l'image de référence et l'image masque. En pratique on ne retiendra pas les amers pour lesquels la valeur ainsi mesurée de $X_1$ est trop forte.

De même $X_2$ renseigne sur la présence de structures tissulaires susceptibles de fournir de bons amers. Plus $X_2$ est grand, plus on a de structures. En effet, si on est en plein milieu d'un tissu, tous les points voisins ont quasiment le même niveau de gris. L'écart type est faible. Par contre, si on se trouve à proximité des bords de structures, le voisinage d'un point subit de fortes variations en niveau de gris, et la population des points dans chacun de ces niveaux de gris est plus grande, l'écart type mesuré est alors plus grand. Des grandeurs $X_1$ et $X_2$ grandes renseignent donc sur la présence de bons amers.

La troisième valeur $X_3$ est la valeur d'intérêt dite de Moravec. Elle a été décrite dans une publication intitulée "TOWARDS AUTOMATIC VISUAL OBSTACLE AVOIDANCE" 5EME PROCQ. JOINT CONF. ARTIFICIAL INTELL, CAMBRIDGE, MA, AUGUST 1977, page 584. Pour élaborer cette valeur d'intérêt on considère les quatre directions principales d'une petite fenêtre F centrée sur l'amer potentiel $p_1$ de l'image de référence $I_1$. Les quatre directions principales sont l'horizontale 4, la verticale 5, et les deux diagonales 6 et 7. Sur chaque direction, on calcule la somme des différences au carré du niveau de gris d'un pixel et de son voisin. Ainsi, par exemple selon la direction 4, on calcule la différence du niveau de gris attribué au pixel 8 avec le niveau de gris attribué du pixel 9 qui lui est voisin. On élève cette différence au carré. Et on lui additionne la différence, élevée au carré, du niveau de gris entre le pixel 9 et le pixel 10, le pixel 10 étant voisin en suivant, selon la direction 4, du pixel 9. Ainsi de suite jusqu'au pixel 11 qui se trouve en bord de la fenêtre F sur la direction 4. On calcule la même somme pour chacune des trois autres directions 5, 6 et 7 de Moravec. Puis on attribue à $X_3$ le minimum de chacune de ces quatre sommes. La signification physique de la valeur $X_3$ est alors de caractériser la présence des sommets en niveau de gris dans les structures par opposition aux contours ou aux lignes de crêtes. On peut calculer la valeur d'intérêt de Moravec sur plus que quatre directions, par exemple en prenant quatre autres directions bissectrices entre les quatre premières. Le fait de prendre la valeur minimum signifie que, dès qu'un contour sera rencontré et qu'il sera sensiblement orienté comme l'une quelconque des directions de Moravec, on retiendra justement l'évolution de la valeur des niveaux de gris sur ce contour parce que cette évolution des niveaux de gris sur ce contour est faible. Autrement dit, une valeur $X_3$ faible indique qu'on aura trouvé un contour ou même qu'on est au milieu d'une structure. Par contre, si on a affaire à des sommets, les valeurs $X_3$ seront fortes. En effet, dans ce cas, dans toutes les directions l'évolution des niveaux de gris sera élevée. On comprend qu'un amer sera d'autant plus intéressant qu'il correspondra à un sommet en niveau de gris, à une valeur de Moravec forte.

La figure 2c représente schématiquement le calcul de la grandeur $X_4$ représentative de la norme du gradient au point central $p_1$ de la fenêtre F. De préférence on calcule cette norme du gradient sur le voisinage direct de l'amer potentiel $p_1$. C'est à dire qu'on additionne, à la valeur absolue de la différence des niveaux de gris entre les points 12 et 13, respectivement à gauche et à droite directement du point $p_1$, les valeurs absolues des différences des niveaux de gris entre les points 14 et 15, respectivement directement en dessous et au dessus du point $p_1$. Contrairement à la valeur d'intérêt de Moravec, la grandeur $X_4$ favorise la participation en tant qu'amers des contours de structure. En effet à l'endroit d'un contour, au moins une des deux valeurs absolues des différences des niveaux de gris de pixels voisins est élevée : c'est celle qui est perpendiculaire au contour.

La cinquième grandeur $X_5$ est égale à la valeur du coefficient d'amortissement de la fonction d'auto-corrélation, modélisée par une exponentielle, à l'endroit du centre d'une fenêtre. De préférence cette fonction d'auto-corrélation n'est calculée qu'en huit points autour de l'amer potentiel pour lequel on cherche à évaluer la grandeur $X_5$. On rappelle l'expression suivante de la fonction d'auto-corrélation $R_{xy}(k,l)$ :

$$3 \qquad R_{xy}(k,l) = \frac{\Sigma\Sigma \ (x(i,j)-\overline{x}) \ (y(i+k,j+l)-\overline{y})}{\left[\Sigma\Sigma(x(i,j)-\overline{x})^2\Sigma\Sigma(y(i+k,j+l)-\overline{y})^2\right]^{1/2}}$$

Dans l'expression indiquée on a volontairement, pour limiter les calculs, restreint le domaine de calcul de la fonction R aux huit points marqués d'une croix, dans la périphérie proche de l'amer potentiel à caractériser $p_1$. Ceci signifie que x et y ne peuvent varier dans cette expression que par des valeurs égales successivement à -2, 0, et +2. On a négligé les points directement proches pour lesquels cette variation vaut 1. On aurait pu bien entendu choisir un domaine plus large et/ou une fonction d'auto-corrélation plus complexe. L'expérience a montré que celle qui est ici proposée, tout en étant simple, était efficace. La signification physique de l'auto-corrélation est d'aider à la détermination de sommets de niveau de gris bien marqués. En effet, si un sommet est trop faiblement marqué, si par exemple le point $p_1$ est le seul à avoir un niveau de gris élevé, et si son entourage immédiat est d'un niveau commun, on pourra déterminer, avec un résultat du calcul de la fonction d'auto-corrélation faible, que le point ne sera vraisemblablement pas un bon amer. La fonction d'auto-corrélation ainsi estimée est normalisée, elle ne dépend pas des niveaux de luminosité $n_1$ eux mêmes. On admet que cette fonction d'auto-corrélation présente une forme décroissante approximable par une exponentielle décroissante. Le coefficient d'amortissement $\underline{a}$ de cette exponentielle décroissante, assimilable à une constante de temps est représentatif de l'auto-corrélation. Plus $\underline{a}$ est grand, plus cela signifiera que l'amer sera intéressant. On peut montrer que, par une méthode classique d'approximation des moindres carrés, ce coefficient d'amortissement $\underline{a}$ sera donné par l'expression suivante

$$4 \qquad a = - \sum_{\substack{l\in[-2,0,2] \\ k\in[-2,0,2]}} \sqrt{k^2+l^2}\cdot Ln \ (R_{xy}(k,l)) \ \Big/ \ \sum_{\substack{l\in[-2,0,2] \\ k\in[-2,0,2]}} \sqrt{k^2+l^2}$$

Dans cette expression Ln désigne le logarithme Népérien de la fonction d'auto-corrélation $R_{xy}$. On remarque en outre que le dénominateur du calcul de $\underline{a}$ est constant pour k et l choisis et qu'il peut être calculé une fois pour toutes.

Ayant calculé ces grandeurs en chaque point, on a alors construit une expression polynomiale de la forme suivante

$$5 \qquad Y = B_0 + B_1 X_1 + B_2 X_2 + B_3 X_3 + B_4 X_4 + B_5 X_5$$

Dans cette expression, $B_1$ à $B_5$ sont des coefficients pondérant les grandeurs $X_1$ à $X_5$, $B_o$ est une constante. On détermine par ailleurs une grandeur Z qui est la norme de la différence entre le vecteur déplacement et l'estimation du déplacement faite par la mesure. On cherche à établir une régression entre cette valeur Z et les caractères $X_i$ en minimisant la fonction $(Y-Z)^2$. On a alors cherché à montrer (prémonition de l'invention) que la grandeur Y est corrélée à l'erreur commise sur l'estimation du déplacement. On a donc établi une régression linéaire entre $Z = \| V - \hat{V}\|$ (où V est le déplacement vrai et $\hat{V}$ le déplacement estimé) et les caractères $X_1$, $X_2...X_5$. Cette régression à été établie grâce à une population de points prise sur une ensemble test de couples d'images parfaitement recalées. En pratique, on a pris environ mille points de mesure pour lesquels on a calculé les $X_1$, $X_2,... X_5$ et $\| V - \hat{V}\|$. La régression a permis de calculer les coefficients $B_0$ à $B_5$. Le coefficient de régression multiple ainsi que les test de Student et de Fisher ont montré que la régression est significative et donc que les caractéristiques $X_0...X_5$ permettent de prédire l'erreur qui serait faite en choisissant un amer potentiel. Dans un exemple, correspondant à des images d'angiographie, on a pu calculer que les valeurs de $B_i$ pouvaient prendre les valeurs suivantes : $B_0 = 0,5$ ; $B_1 = 4,8$ ; $B_2 = B_3 = B_4 = 0$ et $B_5 = -2,7$. La prise en compte de $X_2 X_3 X_4$ a, dans cet exemple d'angiographie, été négligée pour limiter les calculs.

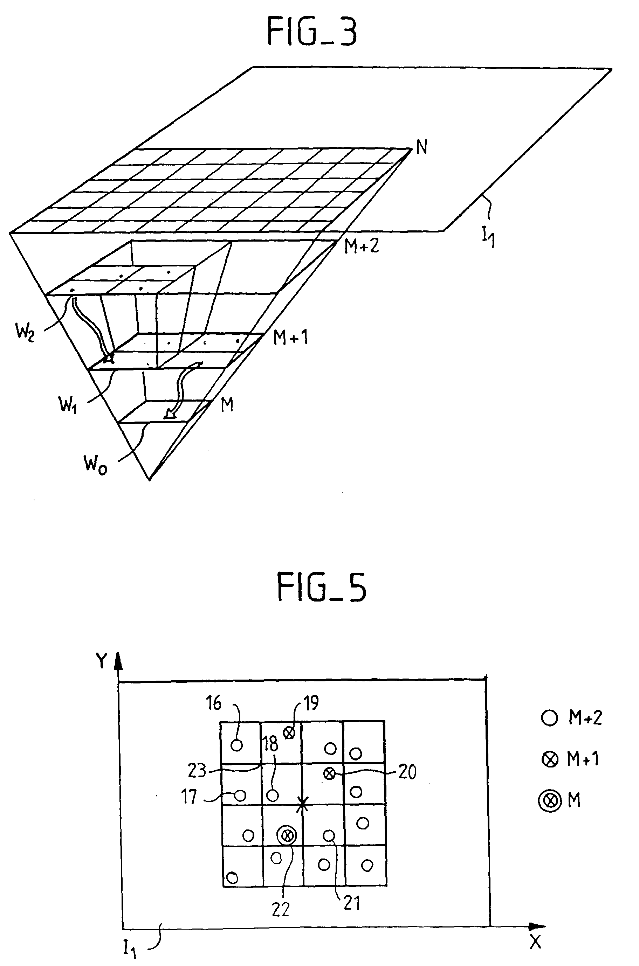

Un autre intérêt de l'invention est de proposer un choix des amers qui respecte l'homogénéité de la répartition de ces amers dans l'image. La figure 3 permet d'expliquer comment dans l'invention on respecte l'homogénéité de la répartition des amers. L'image $I_1$ dans sa résolution la plus fine (512 x 512) c'est à dire au niveau N peut être sous-échantillonnée selon une méthode connue dite de type quadtree. Selon cette méthode de sous-échantillonnage, quel que soit un niveau de résolution donné, par exemple M+2 dans lequel une fenêtre $W_2$ comporte 4 amers, cette fenêtre peut être sous-échantillonneé, à un niveau M+1 en une seule fenêtre $W_1$ ne comportant plus qu'un seul amer. Puis la fenêtre $W_1$ avec trois de ses voisines peut à nouveau être sous-échantillonnée, ou agglomérée, de manière à donner au niveau M une fenêtre $W_0$ ne comportant elle plus qu'un seul amer au lieu des quatre contenus au niveau M+1 ou des 16 contenus au niveau M+2. Ainsi de suite, on voit qu'à chaque niveau de sous-échantillonnage il n'y a qu'un amer dans chacune des fenêtres de l'image $I_1$ : la répartition des amers est alors beaucoup plus homogène que si, plutôt que de choisir ce critère hiérarchique on n'avait choisi pour sélectionner les amers intéressants que des critères de robustesse.

Au niveau 512 x 512 le nombre d'amers potentiels est trop important. Pour permettre un premier tri, dans l'invention, on peut ne se préoccuper que d'une des grandeurs préalablement évoquée : la grandeur $X_4$ représentant la norme du gradient.

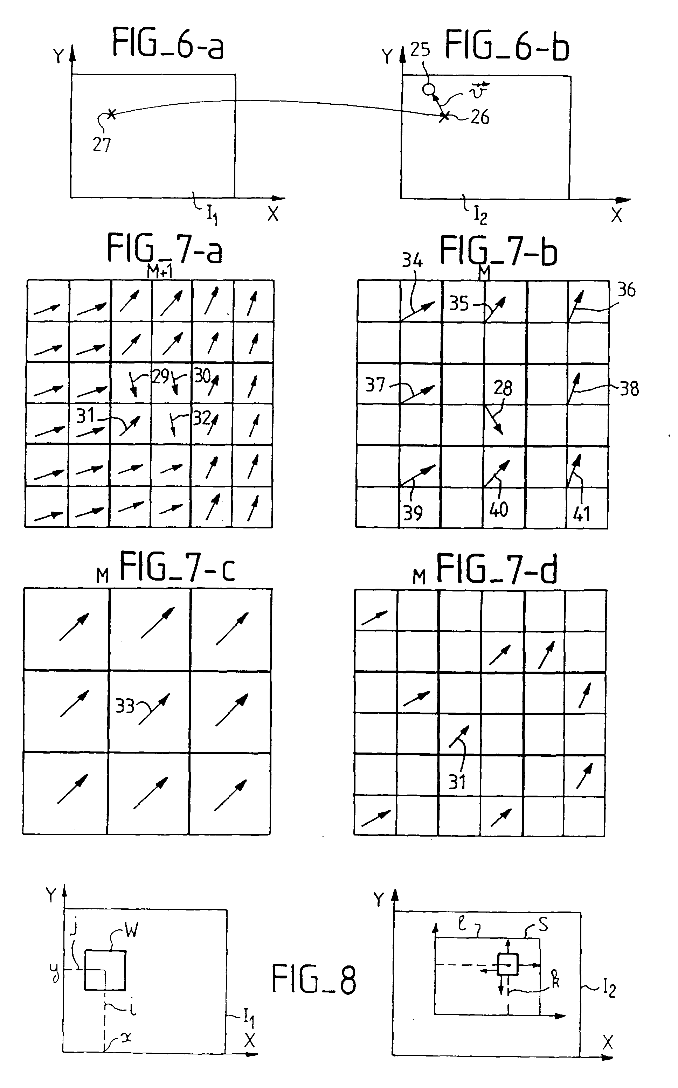

La figure 5 va permettre de comprendre quels amers représentés par des petits ronds à un niveau M+2 seront automatiquement déclarés vainqueurs de l'agglomération qui conduit au niveau de résolution M+1 (64), et qui seront présentés par des petits ronds maintenant barrés d'une croix. Parmi quatre amers sélectionnés hiérarchiquement au niveau M+1 on peut ensuite trouver automatiquement lequel va survivre au niveau préféré M et marqué d'un double rond barré par une croix. Ainsi les fenêtres comportant les amers 16 à 19 sont elles agglomérées en une seule fenêtre au niveau M+1 avec comme amer correspondant l'amer 19. De même l'amer 19 sera aggloméré avec des amers 20 à 22, à un même niveau M+1 que lui, pour donner comme amer vainqueur au niveau M l'amer 22. Si dans tout le reste de l'image on procède de manière identique, on voit que l'homogénéité de la répartition des amers est maintenue.

Le critère d'agglomération au moment d'une transition de niveau (entre le niveau M+2 et le niveau M+1 par exemple) est de préférence un critère de minimisation d'une fonction dite de coût de transition constituée d'un terme mesurant l'homogénéité de la répartition des amers d'une part et d'un terme mesurant la robustesse des amers candidats d'autre part. En pratique cette fonction de coût pourra s'écrire

$$6 \qquad C = \alpha \, C_h + \beta C_r$$

Dans cette expression, $\alpha$ et $\beta$ sont des coefficients qui peuvent être pris de valeurs quelconques, pour simplifier on les a pris tous les deux égaux à 1 ; $C_h$ et $C_r$ sont respectivement un terme mesurant l'homogénéité et un terme mesurant la robustesse de l'amer candidat. En pratique on déterminera que le terme $C_r$ est l'inverse de Y pour l'amer candidat, et que $C_h$ est la distance de l'amer candidat d'une cellule à un étage Q (M+2), au centre de la cellule de l'étage Q-1 (M+1) dont elle est issue. Par exemple, le coût d'homogénéité de chacun des amers potentiels 16 à 19 est la distance qui sépare chacun de ces amers du centre 23 de la cellule qui les agglomère. Autrement dit au moment de l'agglomération on ne retient pas les amers uniquement en fonction de leur robustesse mais aussi en fonction de l'homogénéité. En pratique ceci signifie qu'il ne sert à rien d'avoir une population d'amers très robustes si ces amers sont cantonnés dans une région de l'image où, malheureusement, la signification d'image est peu importante pour celui qui la regarde. Bien entendu pour choisir parmi les 4 amers 16 à 19 celui qui sera le vainqueur on prend celui pour lequel la fonction de coût C sera la plus faible. Ceci signifie qu'on apprécie en sens inverse dans cette expression la robustesse et l'homogénéité : une plus grande robustesse entraînant naturellement une moins grande homogénéité et vice versa. En choisissant le minimum on est ainsi sûr d'obtenir un optimum, dépendant des coefficients $\alpha$ $\beta$, entre ces deux critères.

Après avoir choisi au niveau M+2 quel était parmi les amers potentiels celui qui était retenu (en prenant celui pour lequel Y est le plus faible) on a sélectionné au niveau M+1 celui de ces amers choisis qui présente un coût de transition le plus faible. Au niveau M+1 on procède ensuite à l'estimation des vecteurs de déplacement à affecter à chacun des amers retenus à ce niveau. Dans une étape ultérieure et spécifique de l'invention, on validera dans une opération d'agglomération supplémentaire, pour arriver au niveau M, les amers retenus au niveau M+1 avec leurs vecteurs déplacements de manière à éliminer des amers dont les vecteurs déplacement présenteraient des aberrations. D'une manière connue le vecteur déplacement v mesuré à l'endroit de chacun des amers sera obtenu par une opération connue de cross-corrélation dont l'expression est donnée ci-après :

$$7 \qquad \vec{v} = (k,l) \text{ pour le max de } T(k,l) \text{ tel que}$$

$$\max T(k,l) = \sum_{x,y} n_1(x,y) * n_2(x+k, y+l)$$

Dans cette expression, $\vec{V}$ est le vecteur de déplacement à l'endroit de l'amer.

En recherchant dans l'image $I_2$, figures 6a et 6b, le couple de coordonnées k et I pour lequel la fonction de cross-corrélation T(k,l) est maximum on détermine quels sont les correspondants 25 de la projection 26 dans l'image $I_2$ des amers calculés 27 dans l'image $I_1$. Le vecteur v reliant 26 à 25 mesure le déplacement subi par l'image des structures correspondant au point 27 au moment de la prise de cliché de l'image $I_2$. Le vecteur v est ainsi estimé par cross-corrélation.

La figure 7a donne en exemple une représentation du résultat du calcul par cross-corrélation des vecteurs déplacement. On peut penser qu'une agglomération supplémentaire, pour passer du niveau M+1 au niveau M, pourrait conduire à retenir comme amer intéressant l'amer dont le vecteur déplacement 28 sur la figure 7b a un caractère manifestement aberrant par rapport à ses voisins. Dans l'invention, dans cette agglomération supplémentaire pour passer au niveau M préféré, on filtre alors les amers en fonction de l'allure de leur vecteur déplacement. Les quatre vecteurs déplacement correspondants à ces amers à agglomérer ont des coordonnées respectivement $(k_1, l_1)$ à $(k_4, l_4)$. On peut calculer par filtrage un vecteur moyen de coordonnées k et I tel que k est la moyenne de $k_1$ à $k_4$ et tel que I est égal à la moyenne de $l_1$ à $l_4$. En pratique cela signifie que les quatre vecteurs déplacement 29 à 32 de la figure 7a ont pour image un vecteur moyen 28 sur la figure 7b. Dans l'invention, on calcule en plus, sur un voisinage de 3 x 3 cellules au niveau M, la moyenne 33 (au niveau M) des moyennes (au niveau M+1) des vecteurs déplacement. Ainsi, pour le calcul de la valeur du vecteur 33, les vecteurs déplacement moyens voisins 34 à 41 et 28 sont utilisés. De même qu'on a calculé pour le vecteur 33 la moyenne des moyennes, on peut calculer les variances des moyennes sur un même voisinage de 3 X 3 cellules. On calcule ensuite la norme de la différence entre le vecteur moyen 28 et la moyenne 33 des moyennes des vecteurs du voisinage. Si cette norme est supérieure à une proportion déterminée K de la variance, on en détermine que le vecteur filtré est le vecteur moyen : le vecteur 33. Par contre, si cette norme n'est pas supérieure à cette fraction prédéterminée K de la variance, on choisit comme vecteur filtré le vecteur mesuré 31. En l'occurrence c'est ce qui se produit sur les figures 7a à 7d où, au niveau M, on a retenu le vecteur déplacement 31 de même sens que le vecteur 33 parce que dans la cellule concernée les vecteurs 29, 30 et 32 semblaient indiquer, ensemble, une certaine cohérence de la distorsion. K est une constante réglant la sévérité du test. On a retenu, dans la figure 7a le vecteur 31 parce que c'est celui qui s'approche le plus du vecteur filtré 33 retenu pour la cellule considérée.

Autrement dit pour le passage du niveau M+1 au niveau M, en définitive, on calcule un vecteur filtré et on retient comme amer celui dont le vecteur déplacement s'approche le plus du vecteur filtré. On obtient ainsi un champ régulier de vecteurs finaux sans être obligé d'imposer cette régularité par un filtrage brutal des mesures. Les vecteurs finaux sont pour la plupart d'entre eux des vecteurs estimés localement et non des vecteurs altérés par filtrage. Cet algorithme de sélection validation d'une banque d'amers apparaît comme l'élément essentiel d'un algorithme de recalage. Associée à une méthode performante d'estimation des vecteurs déplacement comme la cross-corrélation définie plus haut, cette approche hiérarchique permet d'obtenir un champ de vecteurs consistant suffisamment denses, uniformément réparti, et pas trop difficile à calculer par l'opération de cross-corrélation, puisqu'ils sont peu nombreux.

L'estimation locale du déplacement est réalisée par un calcul d'une cross-corrélation entre images. On déplace pour se faire, figure 8, une fenêtre de mesure notée W centrée sur un amer de l'image $I_1$ devant une zone de recherche notée S de l'image $I_2$. Pour chaque position de l'image W dans S, on calcule la fonction de cross-corrélation. Ceci est équivalent à définir une surface dont les point sont repérés par des coordonnées k, l, d'un vecteur déplacement proposé. La position du maximum de cette surface donne une estimation du déplacement à associer au point central de la fenêtre W. De manière à simplifier les opérations complexes de cross-corrélation, le calcul est effectué sur des images $I_1$ et $I_2$ binaires, et donc dans des espaces discrets. Les déplacements obtenus sont alors donnés en nombres entiers de pixels. On obtient une image binaire en utilisant les images déduites au moment du pré-traitement par seuillage du gradient. On attribue un bit 1 aux points d'image retenus et un bit 0 aux points d'image non retenus. On peut montrer que dans ces conditions, le calcul de la fonction de cross-corrélation revient à effectuer l'opération suivante

$$8 \quad T(k,l) = \sum_{\substack{y \in w \\ x \in w}} n_1(x,y) * n_2(x+k,y+l) / \sum_{\substack{y \in w \\ x \in w}} n_2(x+k,y+l)$$

Dans cette expression n représente la valeur binaire 1 ou 0 qui remplace le niveau de gris. On pourrait montrer que l'opération de multiplication est dans ce cas très simple puisqu'elle revient à effectuer un ET logique.

Comme on l'a dit plus haut la valeur du déplacement au maximum est donnée en un nombre entier de pixels puisqu'elle est justement déterminée par la position d'un point. De préférence on atteindra une valeur fractionnaire du vecteur déplacement (pour rendre les corrections plus précises) en calculant la valeur interpolée autour de la position entière du maximum. De préférence en approxime cette position interpolée par une quadrique. On écrit alors

$$9 \qquad T(x,y) = Ax^2 + By^2 + Cxy + Dx + Ey + F$$

On sait qu'on connaît la fonction T lorsque x et y ont des valeurs entières. En retenant un certain voisinage, par exemple de neuf points, autour du sommet en coordonnées entières, on est conduit à neuf équations pour seulement six inconnues : les six paramètres A à F. On approxime par une régression aux moindres carrés les valeurs des six paramètres A à F. Et on détermine alors que le maximum de la quadrique se trouve à l'endroit de coordonnées $X_0$ $Y_0$ données par les formules suivantes :

$$10 \qquad X_0 = (-2BD + CE)/(4AB-C^2)$$

$$Y_0 = (-2AE + CD)/(4AB-C_2)$$

$X_0$ et $Y_0$ sont des fractions d'unités : le vecteur déplacement réel de l'amer est la somme algébrique de coordonnées entières et factionnaires. Pour restaurer l'image masque $I_2$ décalée, il est nécessaire de connaître le vecteur déplacement associé à chaque pixel de $I_2$. Ce déplacement, appelé quelquefois flot optique, est calculé par interpolation de ses composantes $V_x$ et $V_y$. On doit donc calculer $v_x(x, y)$ et $V_y(x, y)$ pour chacun des 512 x 512 points de l'image masque à partir des mesures $v_x$ et $v_y$ sur les $M^2$ amers validés au niveau M. On en est ainsi amené à l'interpolation de deux surfaces $V_x$ de (x, y) et $V_y$ (x y) à partir d'un maillage irrégulier de valeurs connues. En effet, les valeurs connues sont irrégulièrement réparties puisque les amers retenus au niveau M n'ont aucune raison de se trouver au centre des cellules. On procède alors par triangulation de l'espace et interpolation sur chaque triangle par une fonction bi-variable de degré 1 (plan), ou de degré 5, pour trouver les coordonnées des vecteurs déplacement au centre des cellules. L'interpolation de degré 5 permet de réaliser la continuité des dérivés sur les côtés des triangles. Cette technique est connue et est décrite dans l'état de la technique dans H. AKIMA - ACM transaction Math Software 4 - June 1978, pages 148-159 "A method of bivariate interpolation and smooth surface filling for irregularly distributed data points.

Disposant du vecteur déplacement de chaque pixel, il est nécessaire d'appliquer celui-ci afin d'obtenir une image $I_3$ recalée. En pratique l'image recalée est construite en calculant les niveaux de gris en chaque point de la matrice NXN (512 X 512) d'échantillonnage fin. Le niveau de gris d'un pixel (x, y) de l'image $I_3$ recalée est le niveau de gris situé en $(x - V_x, y - V_y)$ de l'image masque. Le déplacement $(V_x, V_y)$ n'étant pas entier, le point que l'on doit aller chercher n'est pas situé sur la matrice d'échantillonnage. On estime alors sa valeur par interpolation sur ses quatre voisins.

## Revendications

1.  Procédé de recalage automatique d'images dans lequel on recale une deuxième image ($I_2$), dite masque, distordue par rapport à une première image dite de référence ($I_1$), chaque image comportant des points et étant définie comme une collection d'adresses de ces points, chaque adresse étant associée à un niveau de gris, ce procédé comportant les étapes suivantes :

    -   on sélectionne dans la première image, un ensemble d'amers,
    -   on recherche les correspondants de ces amers dans la deuxième image,
    -   on estime les déplacements subis par les amers sélectionnés de la première image par rapport aux amers recherchés correspondants de la deuxième image,
    -   on restaure une des images, de préférence l'image masque, en corrigeant la position ou le niveau de gris des points de cette image en tenant compte des déplacements des amers au voisinage de ces points,
    -   on attribue à des points de la première image une ou des grandeurs calculées caractéristiques de la robustesse et de l'homogénéité de répartition de points de cette image susceptibles de servir d'amers,
    -   et on trie les amers à retenir en fonction de la satisfaction d'une combinaison de ces grandeurs en ces points à un critère,

    une desdites grandeurs calculées étant $X_5$: la valeur (a) du coefficient d'amortissement de la fonction d'autocorrélation modélisée par une exponentielle, à l'endroit de l'amer à caractériser ; le procédé de recalage automatique étant caractérisé en ce qu'on calcule aussi les grandeurs $X_1$ à $X_4$ suivantes :

    -   $X_1$: la différence entre les deux images, de préférence normalisée des moyennes des niveaux de gris, ces moyennes étant calculées, dans chacune des deux images, sur une population de points contenus dans des fenêtres (F) encadrant des points ($p_1$, $p_2$) superposables considérés;

- $X_2$: l'écart type des niveaux de gris d'une population de points situés dans une fenêtre (F) encadrant, dans la première image, un amer à caractériser;
- $X_3$: la valeur d'intérêt de Moravec pour les points à caractériser de la première image;
- $X_4$: la valeur normalisée du gradient de niveau de gris, calculée sur un amer à caractériser dans la première image;

et en ce que on trie les amers en fonction d'une combinaison des grandeurs, cette combinaison étant exprimée analytiquement en fonction de ces grandeurs, des coefficients $B_0$, $B_1$, $B_2$, $B_3$, $B_4$ et $B_5$ de cette combinaison étant déterminés par une évaluation analytique statistique sur une population d'images d'un même type, dont les caractéristiques de restauration sont déjà connues.

2. Procédé selon la revendication 1, caractérisé en ce que les coefficients ont les valeurs suivantes: $B_0 = 0,5$; $B_1 = 4,8$; $B_5 = -2,7$; $B_2 = B_3 = B_4 = 0$.

3. Procédé selon la revendication 1 ou 2, caractérisé en ce que

- on sélectionne hiérarchiquement les amers, selon une méthode quadtree en procédant à un sous-échantillonnage itératif (M+1) des amers de la première image sélectionnée pour une résolution donnée (M+2) de cette première image.

4. Procédé selon la revendication 3, caractérisé en ce que

- on évalue au niveau sous-échantillonné la répartition des amers et leur robustesse, et
- on sélectionne les amers en choisissant un minimum d'une fonction analytique de coût de transition (C) dont cette répartition et cette robustesse sont les variables.

5. Procédé selon l'une quelconque des revendications 1 à 4, caractérisé en ce que pour sélectionner on retient, pour chaque fenêtre d'un ensemble de fenêtres connexes recouvrant la première image, un même nombre d'amers.

6. Procédé selon la revendication 3, caractérisé en ce qu'on procède à un deuxième sous-échantillonnage consécutif au premier en filtrant les amers consistants dont le vecteur déplacement associé, calculé par ailleurs, est le plus cohérent vis-à-vis de ses voisins.

7. Procédé selon l'une quelconque des revendications 1 à 6, caractérisé en ce que on estime les déplacements par cross-corrélation, et en ce qu'on recherche, par approximation par une quadrique, des déplacements fractionnaires impliqués.

## Patentansprüche

1. Verfahren zur automatischen Bildentzerrung, wobei ein zweites Bild ($I_2$), genannt Maske, das in bezug auf ein erstes Bild, das Referenz ($I_1$) genannt wird, entzerrt wird, wobei jedes Bild Punkte umfaßt und als eine Sammlung von Adressen dieser Punkte definiert ist, wobei jede Adresse mit einer Graustufe zusammenhängt, wobei dieses Verfahren die folgenden Schritte umfaßt:

- Auswählen einer Gruppe von Markierungen in dem ersten Bild,
- Ermitteln der Entsprechungen dieser Markierungen in dem zweiten Bild,
- Abschätzen der Verschiebungen, die die ausgewählten Markierungen des ersten Bildes in bezug auf die ermittelten entsprechenden Markierungen des zweiten Bildes durchlaufen haben,
- Wiederherstellen eines der Bilder, vorzugsweise des Maskenbildes, indem die Position oder die Graustufe der Punkte dieses Bildes unter Berücksichtigung der Verschiebungen von Markierungen in der Nähe dieser Punkte korrigiert wird,
- Zuordnen einer oder mehrerer charakteristischer berechneter Größen der Stabilität und der Homogenität der Verteilung von Punkten dieses Bildes, die als Markierungen dienen können, zu Punkten des ersten Bildes,
- Sortieren der Markierungen unter diesen Punkten in Abhängigkeit von der Erfüllung einer Kombination dieser Größen nach einem Kriterium,

wobei eine dieser berechneten Größen $X_5$ der Wert (a) des Dämpfungskoeffizienten der Autokorrelationsfunktion, die durch eine Exponentialfunktion am Ort der zu kennzeichnenden Markierung modelliert wird, ist, wobei das automatische Entzerrungsverfahren dadurch gekennzeichnet ist, daß außerdem die Größen $X_1$ bis $X_4$ wie folgt berechnet werden:

- $X_1$: Differenz zwischen den zwei Bildern, vorzugsweise in bezug auf den Mittelwert der Graustufen normalisiert, wobei die Mittelwerte in jedem der beiden Bilder aus einer Häufigkeit von Punkten berechnet sind, die sich in Fenstern (F) befinden, die Punkte ($p_1$, $p_2$) einrahmen, die als überlagerbar betrachtet werden;
- $X_2$: der typische Abstand von Graustufen einer Häufigkeit von Punkten in einem Fenster (F), das in dem ersten Bild eine zu charakterisierende Markierung beinhaltet,
- $X_3$: der interessierende Moravec-Wert der zu charakterisierenden Punkte des ersten Bildes,
- $X_4$: der normalisierte Gradientenwert der Graustufe, berechnet zu einer zu charakterisierenden Markierung in dem ersten Bild;

und daß die Markierungen in Abhängigkeit von einer Kombination von Größen sortiert werden, wobei diese Kombination analytisch in Abhängigkeit von diesen Größen ausgedrückt wird, wobei die Koeffizienten $B_0$, $B_1$, $B_2$, $B_3$, $B_4$ und $B_5$ dieser Kombination bestimmt sind durch eine analytische statistische Entwicklung einer Häufigkeit von Bildern eines gleichen Typs, wobei die Eigenschaften der Wiederherstellung bereits bekannt sind.

2. Verfahren nach Anspruch 1, dadurch gekennzeichnet, daß die Koeffizienten die folgenden Werte haben: $B_0 = 0{,}5$; $B_1 = 4{,}8$; $B_5 = -2{,}7$; $B_2 = B_3 = B_4 = 0$.

3. Verfahren nach Anspruch 1 oder 2, gekennzeichnet durch - hierarchisches Auswählen der Markierungen nach einem Quadtree-Verfahren, in dem ein iteratives Sub-Abtasten (M+1) von Markierungen des ersten ausgewählten Bildes für eine gegebene Auflösung (M+2) dieses ersten Bildes durchgeführt wird.

4. Verfahren nach Anspruch 3, gekennzeichnet durch

- Bestimmen auf der Ebene des Sub-Abtastens einer Verteilung von Markierungen und ihrer Stabilität und
- Auswählen der Markierungen, indem ein Minimum einer analytischen Funktion der Übertragungskosten (C) ausgewählt wird, deren Verteilung und deren Stabilität die Variablen sind.

5. Verfahren nach einem der Ansprüche 1 bis 4, dadurch gekennzeichnet, daß zum Auswählen für jedes Fenster einer Gruppe von verwandten Fenstern, die das erste Bild bedecken, eine gleiche Anzahl von Markierungen übertragen wird.

6. Verfahren nach Anspruch 3, dadurch gekennzeichnet, daß eine zweite Sub-Abtastung nachfolgend nach der ersten durchgeführt wird, indem die festen Markierungen, deren Verschiebungsvektor, der zugeordnet ist, im übrigen berechnet ist, der gegenüber seinen Nachbarn kohärenteste ist, gefiltert werden.

7. Verfahren nach einem der Ansprüche 1 bis 6, dadurch gekennzeichnet, daß die Verschiebungen durch Kreuzkorrelation abgeschätzt werden und daß durch Annäherung an eine Kurve zweiten Grades implizite Teilverschiebungen ermittelt werden.

## Claims

1. A method for the automatic resetting of images wherein a resetting is done of a second image ($I_2$), called a mask image, distorted with respect to a first image, called a reference image ($I_1$), each image having points and being defined as a collection of addresses of these points, each address being associated with a gray level, said method including the following steps:

- a selection is made in the first image of a set of land-marks;
- a search is made for the correspondents of these land-marks in the second image;
- an estimation is made of the shifts undergone by the selected landmarks of the first image with respect to the corresponding searched-for landmarks of the second image;
- one of the images, preferably the mask image, is restored by correcting the position or the gray level of the points of this image in taking into account the shifts of the landmarks located in the neighborhood of these points;

- to points of the first image, an assignment is made of one or more computed magnitudes characteristic of the solidity and of the homogeneity of distribution of points of this image likely to act as landmarks;

- a sorting-out is made of the landmarks to be chosen as a function of the satisfying criterion by a combination of said magnitudes at said points;

- one of said computed magnitudes being $X_5$: the value (a) of the damping coefficient of the self-correlation function modelized by an exponential function, at the position of the landmark to be characterized;

- the process for automatic resetting being characterized in that the following magnitudes $X_1$ to $X_4$ are also computed:

- $X_1$: the difference, preferably standardized, between the two images in the means of the gray levels, these means being computed in each of the two images on a population of points contained in windows (F) framing considered superimposable points $p_1$, $p_2$);

- $X_2$: the standard deviation of the gray levels of a population of points located in a window framing (F), in the first image, a landmark to be characterized;

- $X_3$: the useful value of Moravec for the points, to be characterized, of the first image;

- $X_4$: the standardized value of the gray level gradient, computed on a landmark to be characterized in the first image; and the landmarks are sorted out as a function of a combination of magnitudes, said combination being expressed analytically as a function of these magnitudes, coefficients $B_o$, $B_1$, $B_2$, $B_3$, $B_4$ and $B_5$ of this combination being determined by a statistical analytical assessment on a population of images of one and the same type, the characteristics of restoration of which are already known.

2. Method according to Claim 1, characterized in that the coefficients have the following values: $B_o = 0.5$; $B_1 = 4.8$; $B_5 = -2.7$; $B_2 = B_3 = B_4 = 0$.

3. Method according to Claims 1 or 2, charazterized in that:

- the landmarks are selected hierarchically, according to a quadtree method, in performing an iterative sub-sampling (M+1) of the landmarks of the first image selected for a given resolution (M+2) of this first image.

4. Method according to Claim 3, characterized in that:

- an assessment is made, at the sub-sampling level, of the distribution of the landmarks and of their solidity, and

- the landmarks are selected by choosing a minimum of an analytical function of transition cost (C) for which this distribution and this solidity are the variables.

5. Method according to either of Claims 1 to 4, characterized in that, to make the selection, one and the same number of landmarks is chosen for each window of a set of related windows covering the first image.

6. Method according to Claim 3, characterized in that a second sub-sampling, following the first one, is done by filtering the consistent landmarks for which the associated shift vector, computed otherwise, is the most coherent with respect to its neighbors.

7. Method according to any one of Claims 1 to 6, characterized in that the shifts are estimated by cross- correlation and that the fractional shifts involved are sought by approximation by a quadric.

FIG_1-a

FIG_1-b

FIG_1-c

FIG_1-d

FIG_4-a

FIG_4-b
histogramme

FIG_4-c

FIG_2-a

FIG_2-b

FIG_2-c

FIG_2-d

# FIG_3

# FIG_5

FIG_6-a

FIG_6-b

FIG_7-a

FIG_7-b

FIG_7-c

FIG_7-d

FIG_8